# EUROPEAN PATENT SPECIFICATION

(11) **EP 4 390 648 B1**
(45) Date of publication and mention of the grant of the patent: **29.07.2026**
(21) Application number: 22875096.4
(22) Date of filing: 29.09.2022
(51) Int. Cl.: G06F 3/06

(54) **DATA PROCESSING METHOD AND APPARATUS, PROCESSOR, AND HYBRID MEMORY SYSTEM**
DATENVERARBEITUNGSVERFAHREN UND -VORRICHTUNG, PROZESSOR UND HYBRIDSPEICHERSYSTEM
PROCÉDÉ ET APPAREIL DE TRAITEMENT DE DONNÉES, PROCESSEUR ET SYSTÈME DE MÉMOIRE HYBRIDE

(30) Priority: 30.09.2021 CN 202111160263
(43) Date of publication of application: 26.06.2024
(73) Proprietor: Huawei Technologies Co., Ltd., Shenzhen, Guangdong 518129 (CN)
(72) Inventor: ZHU, Xiaoping, Shenzhen, Guangdong 518129 (CN); CHEN, Huan, Shenzhen, Guangdong 518129 (CN)
(74) Representative: Thun, Clemens
(86) International application number: PCT/CN2022/122693
(87) International publication number: WO 2023/051715

(56) References cited:
- EP-A1- 3 608 788
- CN-A- 104 699 424
- CN-A- 106 227 598
- CN-A- 107 193 646
- CN-A- 108 804 350
- CN-A- 110 532 200
- ZHIPENG TAN ET AL: "ALDM: Algorithm of Adaptive Loading Data Migration in distributed file system", 31 October 2012, APMRC, 2012 DIGEST, IEEE, PAGE(S) 1 - 8, ISBN: 978-1-4673-4734-1, XP032299380
- LUIZ E RAMOS ET AL: "Page placement in hybrid memory systems", SUPERCOMPUTING, ACM, 2 PENN PLAZA, SUITE 701 NEW YORK NY 10121-0701 USA, 31 May 2011 (2011-05-31), pages 85 - 95, XP058003717, ISBN: 978-1-4503-0102-2, DOI: 10.1145/1995896.1995911

## Description

### TECHNICAL FIELD

This application relates to the field of computers, and in particular, to a data processing method and apparatus, a processor, and a hybrid memory system.

### BACKGROUND

With the development of multi-core processors, a quantity of cores of a single processor gradually increases, but a quantity of memory channels for the processor to access a memory does not increase accordingly. For example, a maximum quantity of cores of a single central processing unit (central processing unit, CPU) is up to 64, but the quantity of memory channels is only 8. As a result, a memory bandwidth and a memory capacity that are evenly allocated to each processor core become increasingly smaller as the quantity of cores of the processor increases, memory performance severely limits performance of the CPU, and a problem of a memory wall (memory wall) becomes increasingly prominent.

To solve the problem of the memory wall, IBM^{®} provides an open memory interface (open memory interface, OMI), removes a double data rate controller (double data rate controller, DDRC) and a double data rate physical layer (double data rate physical layer, DDR PHY) in the CPU, and implements functions of the open memory interface, the DDRC, and the DDR PHY in the memory. The memory module is also referred to as a differential dual in-line memory module (dual in-line memory module, DDIMM). In this case, the DDIMM is connected to the CPU through the open memory interface. Because the DDRC and the DDR PHY are removed from the CPU, and the OMI is an interface implemented based on a serial bus interface, a quantity of pins (pins) that can be used to expand memory channels in the CPU is increased. For example, a single IBM^{®} POWER9 that supports an open interface can provide 16 memory channels.

However, in the foregoing solution, the processor that supports the OMI supports only a memory chip of a dynamic random access memory (dynamic random access memory, DRAM) type, and the memory chip of this type is costly. For a scenario in which a large-capacity memory needs to be deployed, for example, big data (for example, Apache Spark^{™}), an in-memory database (for example, Redis), or a cloud service (for example, a virtual machine provided by using a memory overcommitment mechanism in a cloud infrastructure) has higher costs. Therefore, how to provide a cost-effective memory wall becomes an urgent technical problem to be resolved.

EP3608788 A1 deals with migration in a hybrid memory.

### SUMMARY

This application provides a data processing method and apparatus, a processor, and a hybrid memory system, to provide a cost-effective memory wall solution. This problem is solved by the subject matter of the independent claims. Further implementation forms are provided in the dependent claims.

According to a first aspect, a method applied to a hybrid memory system is provided. The hybrid memory system includes multiple different types of memory media, for example, a memory medium of a DRAM type and a memory medium of an SCM type. A processor may obtain data distribution of the hybrid memory system; determine a data migration manner based on the data distribution, where the data migration manner is for implementing migration processing on a migration data set between different memory media based on the data distribution; and finally, execute migration processing on the migration data set based on the migration manner. To resolve a problem of a high-cost memory wall, this application provides that different types of memory media are used to form a hybrid memory system, a data migration manner is determined based on data distribution of data in the different types of memory media, and data migration is implemented with reference to attributes of the different types of memory media. This satisfies a computing power requirement of a processor, enables a cost-effective memory medium, and reduces costs of the entire hybrid memory system while ensuring a data processing latency.

Optionally, the data distribution is a manner in which data is stored in the different types of memory media, and may be specifically determined in the following two manners.

Manner 1: Determine the data distribution based on a cold and hot degree of data, that is, the data is stored in storage media of different types based on the cold and hot degree of the data.

Manner 2: Determine based on a cold and hot degree of data and physical attributes of the memory media, where the physical attributes include at least one of the following: a latency, costs, a capacity, and a service life.

In a possible implementation, the hybrid memory system further includes multiple processors. In an initialization phase, a memory resource may be allocated to each processor, a cold and hot degree of a memory page is recorded by using an LRU linked list, and then data migration processing is performed based on the cold and hot degree. Specifically, a memory layout of the hybrid memory system is first obtained, where the memory layout includes a quantity and types of memories deployed in the memory system. Then, a memory resource is allocated to each processor based on the memory layout, and a cold and hot degree of data stored in the memory resource allocated to each processor are recorded by using a least recently used LRU linked list. The LRU linked list includes an active list Active list and an inactive list Inactive list, where the active list identifies information about a memory page on which hot data associated with the processor is located, and the inactive list identifies information about a memory page on which cold data associated with the processor is located. In a management manner of the LRU linked list, a cold and hot degree of data stored in the memory page may be learned, and data migration processing is performed between different memory media based on an attribute tag of the memory page. For example, the hot data may be migrated to a latency-sensitive memory page of a DRAM type, and the cold data may be migrated to a cost-effective memory page of an SCM type. In this way, costs of the hybrid memory system can be reduced, and data processing efficiency can be ensured. In another aspect, for a huge-page memory such as 2 MB, the management manner of the LRU linked list provides a manner of managing memory page access popularity, so that a proper migration operation is performed based on a data attribute in a process of using a memory medium, thereby improving processing efficiency of the entire system and reducing a processing latency of memory access.

In another possible implementation, the LRU linked list may also be used to traverse, based on a scanning request, data distribution of memory pages in different memory media associated with each processor in a hierarchical storage system. The data distribution includes statuses of the memory pages in the different memory media, and the statuses of the memory page include a hot page, a cold page, or a free page. In other words, a status of a memory page may be further learned based on management of the LRU linked list, a hot page and a cold page are distinguished, and a data migration operation is performed based on the status of the memory page, so that hot data is stored in a low-latency memory medium, and cold data is stored in a cost-effective memory medium, thereby ensuring data access efficiency and reducing memory costs of the entire system.

In another possible implementation, different memory media may further respectively construct memory pools, each memory pool includes multiple huge-page memories, and a size of each huge-page memory is greater than a first threshold. In scenarios such as in-memory databases, big data, and cloud services, a huge-page memory pool is constructed, memory access is performed at a granularity of huge pages. Compared with a small-page memory, an amount of data read each time is increased, improving data processing efficiency. In addition, in the different types of memory media, data migration may be further performed in combination with a hierarchical memory mechanism, which can further improve a processing speed of the entire system and reduce memory costs.

In another possible implementation, the data distribution in the memory media may further periodically collect statistics on cold and hot degrees of the memory pages in the different types of memory media by using the scanning request. A data migration process may be dynamically implemented by periodically collecting statistics on the cold and hot degrees of the memory pages in the different types of memory media. In this way, cold and hot attributes of data are associated with characteristics such as a low latency and low costs of the memory media, to ensure that hot data that is frequently accessed is stored in a low-latency memory medium, thereby improving data access efficiency. In addition, cold data that is not frequently accessed is stored in a cost-effective memory medium, thereby reducing costs of the memory media in the entire system.

In another possible implementation, a cold and hot degree of each memory page may be obtained in the following manners: collecting statistics, in a unit periodicity, on a quantity of times that data in each memory page is read; and increasing popularity of any memory page by one when a read operation is performed on the data in the memory page once, where the popularity may indicate a cold and hot degree in which the data in the memory page is accessed in the unit periodicity. The cold and hot degree of each memory page can be ensured by collecting, in the unit periodicity, statistics on quantity of times that the data in each memory page is read, so that a data migration operation is performed based on the cold and hot attributes of the data, thereby properly using memory medium resources of different types.

In another possible implementation, the migration data set includes a first data set, the first data set includes at least one piece of hot data, and the hot data is data of which a quantity of times of being read and written in a unit periodicity is greater than the first threshold.

In another possible implementation, the hybrid memory system may determine a data migration manner in the following manners: determining a hierarchical memory mechanism in the hybrid memory system, where the hierarchical memory mechanism indicates levels of the multiple different types of memory media in the hybrid memory system, for example, the hybrid memory system includes a first level and a second level; and determining the data migration manner based on the data distribution and the hierarchical memory mechanism. By classifying the different types of memory media in the hybrid memory system, data may be further stored with reference to the physical attribute of the memory media. For example, the different types of memory media are classified based on physical attributes such as a latency, costs, a service life, and a capacity of the memory media, and then data is stored with reference to the cold and hot degree of the data, so that an advantage of the memory media can be fully utilized to implement classification management of cold data of hot data, thereby improving utilization of the memory media. Similarly, to ensure data processing efficiency in the entire system, based on an application requirement and the physical attribute of the memory media, latency-sensitive data may be stored in a low-latency memory medium, and non-latency-sensitive data may be stored in a cost-effective memory medium, thereby ensuring data processing efficiency and reducing costs of the memory media in the entire system.

In another possible implementation, a first memory medium belongs to the first level, and a second memory medium belongs to the second level; and the data migration manner includes: selecting one or more free memory pages from a first memory pool, and migrating the first data set including data of a hot page in the second memory medium to the one or more free memory pages in the first memory pool. According to the foregoing method, a migration operation may be performed based on a quantity of hot pages in the different memory media and a status of a free resource of the low-latency memory medium, to migrate the data of the hot page to the low-latency memory medium, thereby improving data access processing efficiency.

Optionally, before the migration operation is performed, whether a quantity of free pages in the first memory medium is greater than a quantity of hot pages in the second storage medium may be determined first. When the quantity of free pages in the first memory medium is greater than the quantity of hot pages in the second storage medium, all hot page data is migrated to the first memory medium, or some of the hot page data is migrated to the first memory medium.

In another possible implementation, a first memory medium belongs to the first level, a second memory medium belongs to the second level, the migration data set further includes a second data set, the second data set includes at least one piece of cold data, and the cold data is data of which a quantity of times of being read and written in a unit periodicity is less than or equal to a second threshold; and the data migration manner includes: selecting one or more free memory pages from the second memory pool, and migrating the second data set including data of a cold page in the first memory medium to the one or more free memory pages in the second memory pool. In other words, cold data of the cold page may be migrated to a cost-effective memory medium, so that the low-latency memory medium preferentially stores latency-sensitive data, and resources of the memory media are fully utilized with reference to different physical attributes of the memory media.

Optionally, before the migration operation is performed, whether a quantity of free pages in the first memory medium is less than or equal to a quantity of hot pages in the second memory medium may be determined first. When the quantity of free pages in the first memory medium is less than or equal to the quantity of hot pages in the second memory medium, the second data set including the data of the cold page in the first memory medium is migrated to the one or more free memory pages in the second memory pool. In a possible implementation, in addition to migrating all cold page data to the second memory medium, some of the cold page data may be further migrated to the second memory medium.

Optionally, after the cold data is migrated to the cost-effective memory medium, the first data set including the data of the hot page in the second memory medium may be further migrated to one or more free memory pages in the first memory pool. In other words, in a low-latency memory mechanism, after the cold data is migrated, whether there is hot data in the cost-effective memory medium may be further determined, to migrate the hot data to the low-latency memory medium. In the dynamic data migration process, memory medium resources can be used more properly with reference to the physical attribute of the memory media.

In a possible embodiment, a latency of the first memory medium is lower than a latency of the second memory medium, and costs of the first memory medium are higher than costs of the second memory medium.

Optionally, a service life of a first storage medium is longer than that of the first memory medium, and a capacity of the first storage medium is less than a capacity of the second memory medium.

In a possible embodiment, the first memory medium is a dynamic random access memory DRAM, the second memory medium is a storage-class memory SCM, and the SCM includes at least one of the following: a phase-change memory PCM, a magnetoresistive random-access memory MRAM, a resistive random access memory RRAM, a ferroelectric random access memory FRAM, a fast NAND, or a nano-RAM NRAM.

In a possible embodiment, the processor is connected to the multiple different types of memory media through an interface supporting memory semantics, and the interface includes at least one interface that supports a compute express link CXL, a cache coherent interconnect for accelerators CCIX, or a unified bus UB.

In a possible embodiment, the hybrid memory system is a server or a server cluster, and the server cluster includes two or more servers.

In a possible embodiment, the hybrid memory system is used in a scenario in which a large-capacity memory is deployed, and the scenario includes at least one of the following: big data, an in-memory database, or a cloud service.

According to a second aspect, this application provides a data processing apparatus. The data processing apparatus includes modules configured to perform operation steps of the data processing method according to the first aspect or any possible implementation of the first aspect.

According to a third aspect, this application provides a processor. The processor includes an integrated circuit, the integrated circuit is connected to multiple different types of memory media, and the integrated circuit is configured to implement operation steps of the data processing method according to the first aspect or any possible implementation of the first aspect.

According to a fourth aspect, this application provides a hierarchical storage system. The hierarchical storage system includes a processor and multiple memory media, the processor and the multiple memory media are connected and communicate with each other by using a bus, any one of the multiple memory media is configured to store computer executable instructions, and when the hierarchical storage system runs, the processor executes the computer executable instructions in the memory to perform operation steps of the method according to the first aspect or any possible implementation of the first aspect by using a hardware resource in the hierarchical storage system.

According to a fifth aspect, this application further provides a computer-readable storage medium. The computer-readable storage medium stores instructions, and when the instructions are run on a computer, the computer is enabled to perform the method according to the foregoing aspects.

According to a sixth aspect, this application provides a computer program product including instructions. When the computer program product runs on a computer, the computer is enabled to perform the methods according to the foregoing aspects.

Based on the implementations provided in the foregoing aspects, this application may further perform combination to provide more implementations.

### BRIEF DESCRIPTION OF DRAWINGS

FIG. 1 is a schematic architectural diagram of a cloud service scenario according to this application;
FIG. 2 is a system architecture diagram of big data and an in-memory database according to this application;
FIG. 3 is a structural diagram of a hybrid memory system according to this application;
FIG. 4 is a schematic diagram of implementing a hierarchical memory mechanism in a hybrid memory system according to this application;
FIG. 5 is a schematic structural diagram of a least recently used linked list according to this application;
FIG. 6 is a schematic flowchart of a data processing method according to this application; and
FIG. 7 is a schematic diagram of a structure of a data processing apparatus according to this application.

### DESCRIPTION OF EMBODIMENTS

For ease of description, terms in this application are first explained.

A storage-class memory (storage-class-memory, SCM) is a new type of non-volatile storage medium that has both advantages of a memory (memory) and characteristics of storage (storage). The storage-class memory has characteristics such as non-volatile, short access time, low cost per bit, solid state, and no moving area. Currently, there are many SCM media technologies, among which a phase-change memory (phase-change memory, PCM) is the most prominent and typical medium, and is one of the earliest storage-class memory technologies that have been launched, for example, an Intel^{®} Optane^{™} memory (Intel^{®} Optane^{™} memory) developed based on 3D Xpoint. In addition, the storage-class memory further includes other types such as a magnetoresistive random-access memory (magnetoresistive random-access memory, MRAM), a resistive random access memory (resistive random access memory, RRAM/ReRAM), a ferroelectric random access memory (ferroelectric random access memory, FRAM), a fast NAND (fast NAND), and a nano-RAM (Nano-RAM, NRAM).

A kernel mode may also be referred to as a host kernel mode. Because access capabilities between different programs need to be limited to prevent the programs from obtaining memory data of another program or obtaining data of a peripheral device, a processor classifies two permission levels, namely, a user mode and a kernel mode. When a task or a process executes a system call and is executed in kernel code, the process is referred to as being in the kernel mode. In this case, the processor runs in kernel code with the highest privilege level. In the kernel mode, the processor may access all data of the memory, including a peripheral device such as a memory and a network adapter.

The user mode may also be referred to as a host user mode. When a process is executing code of a user, the process is referred to as being in the user mode. In this case, the processor runs in the user code with the lowest privilege level, and can only use a conventional processor instruction set, but cannot use a processor instruction set that operates a hardware resource. In the user mode, the processor can only access the memory with restrictions, and is not allowed to access a peripheral device, such as input/output (input/output, I/O) read/write, network adapter access, memory application, and the like.

A guest user mode is a user mode of a virtual machine. The virtual machine is a virtual operating system running on a physical host. A kernel mode and a user mode are also defined in the virtual machine operating system, and are also used to limit a permission in the virtual machine. A classification manner is similar to that of the foregoing host kernel mode and host user mode, and details are not described herein again.

The technical solutions in embodiments of this application are clearly described below with reference to the accompanying drawings in embodiments of this application.

To resolve a problem of high costs caused by using a dynamic random access memory (dynamic random access memory, DRAM) based on an open memory interface OMI in a scenario in which a large-capacity memory needs to be deployed, for example, a cloud service (for example, a virtual machine provided by using a memory overcommitment mechanism in a cloud infrastructure), big data (for example, Apache Spark^{™}), or an in-memory database (for example, Redis), this application provides a method for implementing data storage by using a hierarchical memory mechanism based on multiple different types of memory media, to implement memory expansion by supporting different types of memory media, and determine a data migration manner based on data distribution in a hybrid memory system (which may also be referred to as a hierarchical memory system), thereby implementing migration processing by a migration data set with cold and hot attribute identifiers between different memory media.

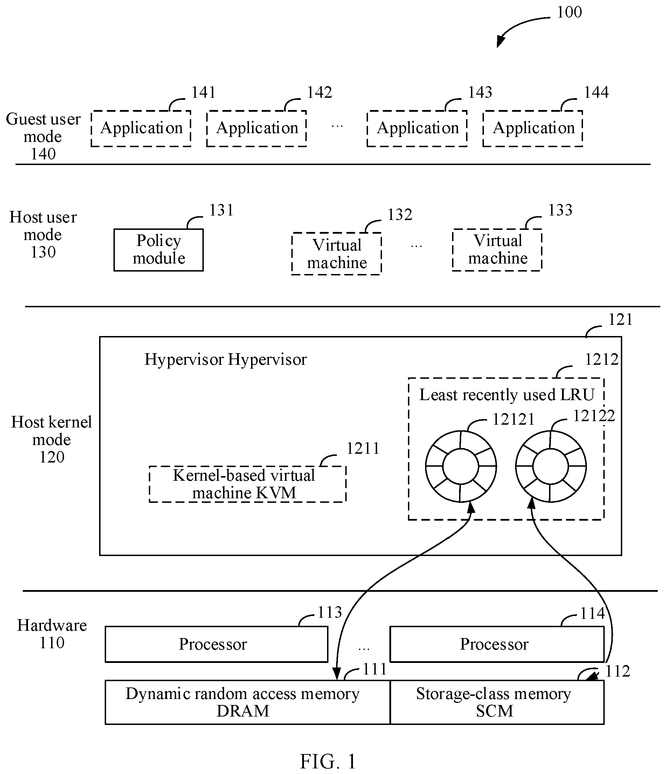

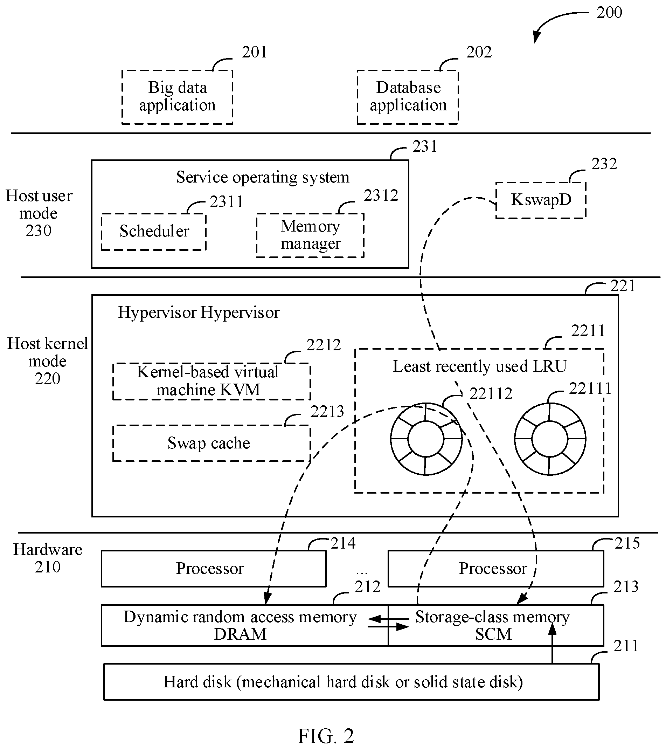

First, schematic architectural diagrams of application scenarios in this application are separately described with reference to FIG. 1 and FIG. 2.

FIG. 1 is a schematic architectural diagram of a cloud service scenario according to this application. As shown in the figure, a system 100 includes hardware 110, a host kernel mode 120, a host user mode 130, and a guest user mode 140.

The hardware 310 includes multiple processors (for example, a processor 113 and a processor 114) and different types of memory media (for example, a DRAM and an SCM).

The host kernel mode 120 includes a hypervisor (hypervisor), and the hypervisor further includes a kernel-based virtual machine (kernel-based virtual machine, KVM) 1211 and least recently used (least recently used, LRU) 1212. The kernel-based virtual machine 1211 is configured to manage a virtual machine 132 and a virtual machine 133 in the host user mode 130. The hypervisor 121 is further configured to manage the least recently used 1212, and the least recently used 1212 is configured to collect statistics on an activity level of accessing data in memory pages of DRAM311 and SCM312.

The host user mode 130 includes a policy module 131 and virtual machines (for example, the virtual machine 132 and the virtual machine 133). One or more applications of the guest user mode 140 run on each virtual machine (for example, an application 141 and an application 142 run on the virtual machine 132, and an application 143 and an application 144 run on the virtual machine 133). The policy module 131 is configured to determine a data migration manner based on an obtained data distribution. In addition, the policy module 131 may further provide a configuration interface for configuring a data migration periodicity for the user, to trigger the hybrid memory system to execute a migration operation based on a periodicity obtained by the configuration interface.

FIG. 2 is a system architecture diagram of big data and an in-memory database according to this application. As shown in the figure, a system 200 includes hardware 210, a host kernel mode 220, and a host user mode 230. A structure and a function of the hardware 210 are similar to those of the hardware 110 in FIG. 1. For brevity, details are not described herein again. The host kernel mode 220 includes a hypervisor (hypervisor) 221, configured to implement management of virtualization software in the system 200 and management of least recently used 2211. The hypervisor 221 includes a kernel-based virtual machine (KVM) 4212 and least recently used (LRU) 2211. A function of the least recently used 2211 is the same as that of the least recently used 1212 shown in FIG. 1, and details are not described herein again. The host user mode 230 runs a service operating system 231, that is, runs an operating system of a big data application 201 or a database application 202. The service operating system 231 further includes a scheduler 2311 and a memory manager 2312. The scheduler 2311 is configured to obtain data distribution in a dynamic random access memory 412 and an SCM 413, determine a data migration manner based on the data distribution, and notify the memory manager 2312 to perform migration processing by a migration data set based on the data migration manner.

In a cloud service scenario, a big data scenario, or an in-memory database scenario shown in FIG. 1 or FIG. 2, deployment may be performed in a form of a single server, or may be performed in a form of a server cluster. The server cluster includes multiple servers.

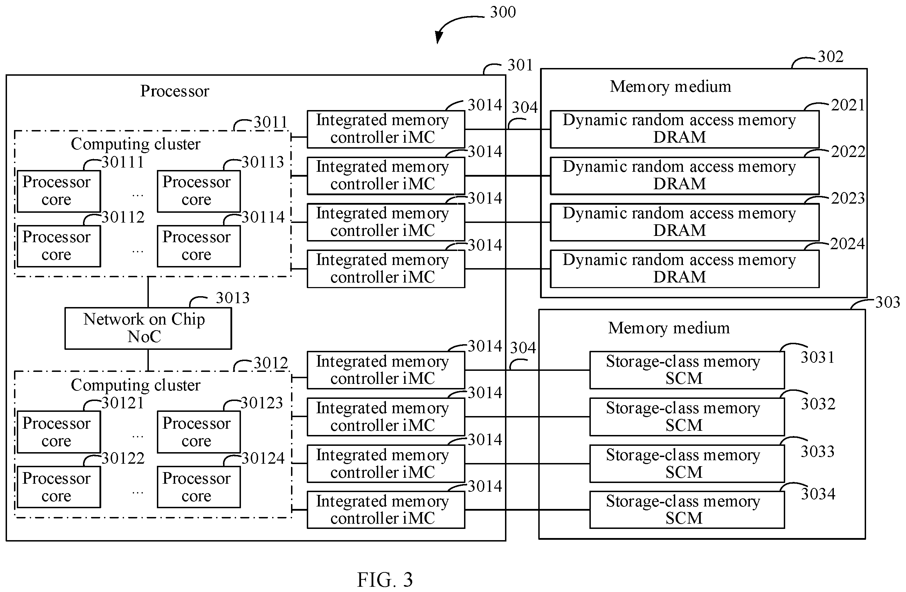

Then, FIG. 3 is used as an example to further describe a schematic structural diagram of a hybrid memory system according to an embodiment of this application. The hybrid memory system may be a server or any server in a server cluster in a scenario in which a cloud service, big data, or in-memory data is deployed. As shown in the figure, a hybrid memory system 300 includes a processor 301 and multiple different types of memory media, for example, a memory medium 302 and a memory medium 303. The memory medium 302 may be a DRAM, and the memory medium 303 may be an SCM.

It is to be noted that, the memory medium 302 and the memory medium 303 are two different types of memory media, and each type of memory medium may include multiple memories. For example, the memory medium 302 may include DRAM 2021, DRAM 2022, DRAM 2023, and DRAM 2024; and the memory medium 303 may include SCM 3031, SCM 3032, SCM 3033, and SCM 3034.

The processor 301 is connected to the memory medium 302 and the memory medium 303 by using an interface that supports memory semantics, where the interface that supports memory semantics includes at least one interface that supports a compute express link (compute express link^{™}, CXL), a cache coherent interconnect for accelerators (cache coherent interconnect for accelerators, CCIX), or a unified bus (unified bus, UB or Ubus).

The processor 301 further includes multiple processor cores, and an integrated memory controller (integrated memory controller, iMC) 3014 configured to implement memory management and control. The multiple processor cores may be further classified into multiple computing clusters, and each computing cluster includes at least one processor core. For example, as shown in FIG. 2, a computing cluster 3011 includes a processor core 30111, a processor core 30112, a processor core 30113, and a processor core 30114; and a computing cluster 3012 includes a processor core 30121, a processor core 30122, a processor core 30123, and a processor core 30124. The multiple computing clusters communicate with each other via a network on chip (network on chip, NoC) 3013, and the network on chip 3013 is configured to implement communication between processor cores in different computing clusters. For a processor of an X86 architecture, the network on chip 3013 may be a node controller (node controller, NC). For a processor of an advanced reduced instruction set computing machine (advanced reduced instruction set computing machine, ARM) architecture, the network on chip 3013 may be a chip or a logic circuit configured to implement communication between processor cores. Each computing cluster is directly or indirectly connected to different memory media by using multiple integrated memory controllers 3014. Optionally, all processor cores in the processor 301 may also be classified into one computing cluster.

The processor 301 may be a CPU, for example, the processor of the X86 architecture or the processor of the ARM architecture. The processor 301 may also be another general-purpose processor, a digital signal processor (digital signal processor, DSP), an application-specific integrated circuit (ASIC), a field programmable gate array (FPGA) or another programmable logic device, a discrete gate or a transistor logic device, a discrete hardware component, a system on chip (system on chip, SoC), a graphic processing unit (graphic processing unit, GPU), an artificial intelligence (artificial intelligent, AI) chip, or the like. The general-purpose processor may be a microprocessor, any conventional processor, or the like.

The multiple memory media may be further configured to store an operating system, a computer executable instruction (or referred to as program code), a kernel, and data, and provide the computer executable instruction to the processor 301, so that the processor 301 executes the computer executable instruction to implement a corresponding function. For example, the memory medium 302 may be configured to store an operating system, a computer executable instruction, and a kernel, so that the processor 301 may execute the computer executable instruction in the memory medium 302 to implement a specific function.

The memory medium 302 may include a read-only memory and a random access memory. The memory medium 302 may further include a non-volatile random access memory. The memory medium 802 may be a volatile memory or a non-volatile memory, or may include both a volatile memory and a non-volatile memory. The nonvolatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), used as an external cache. Through example but not limitative description, many forms of RAMs may be used, for example, a static RAM (static RAM, SRAM), a DRAM (DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM). Optionally, the memory medium 802 may further be a storage-class memory SCM, and the SCM includes at least one of the following: a phase-change memory PCM, a magnetoresistive random-access memory MRAM, a resistive random access memory RRAM, a ferroelectric random access memory FRAM, a fast NAND, or a nano-RAM NRAM.

A type of the memory medium 303 is similar to a type of the memory medium 302, and may also be any one of the foregoing various memory medium types. However, in the hybrid memory system 300, the type of the memory medium 302 is different from the type of the memory medium 303.

The hybrid memory system 300 shown in FIG. 3 is described by using only one processor 301 as an example. In a specific implementation, the hybrid memory system 300 may include two or more processors, and each processor is connected to different types of memory media by using the integrated memory controllers 3014. Each integrated memory controller 3014 is connected to one memory medium to form a memory channel.

In a possible embodiment, in addition to being integrated into the processor 301 in the hybrid memory system 300, as shown in FIG. 3, the integrated memory controller 3014 may also be an off-chip chip outside the processor 301 as an endpoint (endpoint) device in the hybrid memory system 300. In this case, the integrated memory controller 3014 is used as a memory extender.

In a possible embodiment, in addition to that each integrated memory controller 3014 is connected to one memory medium, the multiple integrated memory controllers 3014 may also form a whole, and provide connections between the processor and the memory medium by using different ports. In this case, the memory controller 3014 may provide multiple ports similar to a switch or a switch chip, so that the processor 301 may connect to the memory medium 302 and the memory medium 303 by using the memory controller 3014.

In a possible embodiment, the hybrid memory system 300 is a hybrid memory system. In addition to the memory medium 302 and the memory medium 303 shown in FIG. 3, the hybrid memory system 300 may further include a memory medium of another type, where a type of the memory medium is different from the types of the memory medium 302 and the memory medium 303. For example, at least one type of memory medium such as a random access memory (random access memory, RAM), a static RAM (static RAM, SRAM), a synchronous DRAM (synchronous DRAM, SDRAM), a double data rate SDRAM (double data rate SDRAM, DDR SDRAM), or the like may be added to the hybrid memory system 300. In this case, a server 200 includes hybrid memory media of multiple types. In other words, the hybrid memory system 300 includes any two or more types of memory media of the DRAM, the SCM, the RAM, the SRAM, the SDRAM and the DDR SDRAM. For example, in the hybrid memory system 300, the SDRAM and the SCM may be used as a hybrid memory medium, or the SDRAM and the DRAM may be used as a hybrid memory medium, or the DRAM, the SDRAM, and the SCM may be used as memory media.

For ease of description, in the following embodiments of this application, an example in which two memory media, namely, the DRAM and the SCM, form a hybrid memory medium of the hybrid memory system 300 is used for description.

Further, in an initialization phase, an operating system (operating system, OS) in the hybrid memory system 300 is specifically a processor (for example, the processor 301 in FIG. 2) that runs the operating system, and multiple memory media may be classified into different levels based on a hierarchical memory mechanism. Specifically, the processor 301 may first classify the memory media of multiple types into different levels based on physical attributes of the memory media, where the physical attributes include at least one of the following: a latency, costs, a service life, and a capacity, so that the processor may classify memory media in a multi-level memory system into multiple levels based on at least one of the physical attributes. In addition, memory media of a same type may be classified into one or more levels. For example, different memory media of a same type may be classified into two or more levels based on physical attributes of memory media of different vendors. For ease of description, the following embodiments are described by using an example in which each type of memory medium is classified into one level.

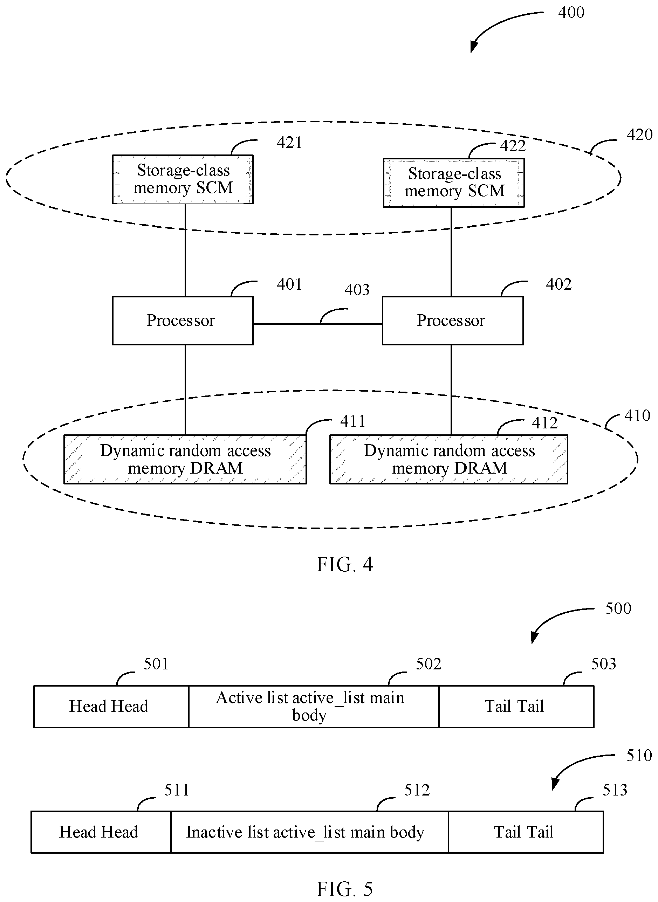

For example, FIG. 4 is a schematic diagram of hierarchical memory in a hybrid memory system according to this application. As shown in the figure, a hybrid memory system 400 classifies memory media in the system into two levels based on physical attributes of the memory media. A set 410 formed by a dynamic random access memory 411 and a dynamic random access memory 412 is classified into a first level, and a set 420 formed by SCM421 and SCM421 is classified into a second level.

It is to be noted that physical attributes are different due to different medium types. For example, a latency of the DRAM is lower than a latency of the SCM, costs of the DRAM are higher than a latency of the SCM, a capacity of the DRAM is lower than a capacity of the SCM, and a service life of the DRAM is higher than a service life of the SCM. During specific implementation, different types of memory media may be classified into different levels based on at least one of the foregoing physical attributes.

Actually, in the initialization phase, the processor 301 that runs an operating system (operating system, OS) in the hybrid memory system further allocates a memory resource to each processor, and records a correspondence between the processor and a memory medium, to perform a data read or write operation based on the correspondence between the processor and a memory medium of a different level.

In the hybrid memory system, each processor and/or a memory medium associated with the processor may be referred to as a non-uniform memory access (non-uniform memory access, NUMA) node. For ease of description, in the following embodiments, a memory medium associated with the processor is referred to as a NUMA node.

For example, as shown in FIG. 4, the hybrid memory system 400 includes two processors, namely, a processor 401 and a processor 402. Each processor is respectively connected to different types of memory media. For a connection manner between each processor and the memory media, refer to the structure shown in FIG. 3. For brevity, details are not described herein again. Generally, DRAM411 connected to the processor 401 may be referred to as a NUMA node 1, DRAM412 connected to the processor 402 may be referred to as a NUMA node 2, SCM421 connected to the processor 401 may be referred to as a NUMA node 3, and SCM422 connected to the processor 402 may be referred to as a NUMA node 4.

In a service implementation, the hybrid memory system 400 may further classify each level of memory medium into memory pages of different sizes, so that an application program running on the processor may perform a read or write operation on the memory pages. Based on the size of the memory page, a memory page whose size is greater than a third threshold may be referred to as a huge page or a huge-page memory, and a memory page whose size is less than or equal to a fourth threshold is referred to as a small page or a small-page memory. The third threshold and the fourth threshold may be the same or may be different. During specific implementation, the third threshold and the fourth threshold may be set based on a service requirement. For example, based on development of a current computer domain, memory pages are usually classified into different sizes, for example, 4 KB, 2 MB, and 1 GB. A 4 KB memory page is also referred to as a small page or a small-page memory, and a 2 MB or 1 GB memory page is referred to as a huge page or a huge-page memory. In a specific implementation, a same hybrid memory system may include multiple memory pages of different specifications, to provide manners for accessing memory of different sizes for different applications. For example, for a compute-intensive application such as a cloud service, big data, or an in-memory database, data access may be implemented by using the huge-page memory. In this case, the processor may perform a data read or write operation at a granularity of the huge-page memory, to improve data processing efficiency. For a common scenario, for example, an office application, a small-page memory may be used to implement data access. Optionally, a same hybrid memory system may include only a huge-page memory. In this case, a memory resource of a memory medium is fully used to implement memory access of a cloud service, big data, or in-memory data.

In a possible implementation, in a large-capacity memory scenario, to improve data processing efficiency, the huge-page memory is usually used to process data. For example, memory pages in a memory medium are classified based on a size of 2 MB, and huge-page memory pools are separately constructed in different memory media. For example, a first huge-page memory pool is constructed in multiple memory media of a dynamic random access storage type, and a second huge-page memory pool is constructed in multiple memory media of an SCM type. Data scanning and migration operations are processed in a form of a huge-page memory pool.

Optionally, in addition to the huge-page memory pool, a small-page memory pool may be further constructed in the hybrid memory system. In other words, in different types of memory media, multiple small-page memories may also be created, and the multiple small-page memories are constructed as one small-page memory. For example, small pages of a size of 4K are separately created in the DRAM and the SCM, multiple small pages created in multiple DRAMs form a first small-page memory pool, and multiple small pages created in multiple SCMs form a second small-page memory pool.

For ease of description, in the following embodiments, an example in which a huge-page memory pool is separately constructed by using memory media of a dynamic random access storage type and memory media of an SCM type.

In addition, the hybrid memory system may further collect, by using a latest recently used LRU linked list, statistics on a cold and hot degree of data stored in each NUMA node. Specifically, each NUMA node is associated with two LRU linked lists, and each NUMA node may uniformly manage, by using the LRU linked list, memory pages (for example, huge-page memories) that have been created in a memory medium corresponding to the NUMA node. One LRU linked list is used to record an active list (Active list), and the active list includes information about a memory page on which hot data in the memory medium is located. The other LRU linked list is used to record an inactive list (Inactive list), and the inactive list includes information about a memory page on which cold data in the memory medium is located. For example, in FIG. 4, an LRU 42112 is an active list, and an LRU 42111 is an inactive list. An entry of each linked list is a structure pointer that describes access information of each memory page in a system and a corresponding memory page. Different locations of entries in the active list (hot data) and the inactive List (cold data) are used to represent cold and hot degrees of corresponding memory pages. The hot data is data whose quantity of times that same data is accessed in a unit periodicity is greater than a preset threshold. In contrast, the cold data is data whose quantity of times that same data is accessed in the unit periodicity is less than or equal to the preset threshold.

A structure of the LRU linked list is shown in FIG. 5. An active list 500 and an inactive List 510 each include three parts: a header, a tail, and a main body. When a memory page of any NUMA node is traversed as a hot page, information about the memory page (for example, information used to uniquely identify the memory page, such as an address and an identifier of the memory page) is loaded to a header 501 of the active list 500. In other words, once a kernel finds, through scanning, a memory page including hot data, an address or an identifier of the memory page is added to the header of the active list. Similar to a processing manner of the Active list 500, when the kernel finds, through traversal, that a memory page associated with any NUMA node is a cold page, an entry is added to a header 511 of the inactive list 510, where the entry records an address or an identifier of the memory page. In this case, regardless of whether the active list 500 or the inactive list 510 is used, information about each memory page may be recorded by using multiple entries. When a scanning request is executed or migration processing is performed in a migration manner, information about a to-be-scanned memory page and a to-be-migrated memory page may be provided based on the foregoing content, so that data in the memory page is migrated based on a hierarchical memory mechanism.

In the hybrid memory system, the processor 301 may classify statuses of a memory page into a hot page, a cold page, and a free page based on a cold and hot degree of stored data. The hot page is a memory page whose quantity of times of accessing any piece of data on a same memory page in a unit periodicity is greater than a first threshold. The cold page is a memory page whose quantity of times of accessing any piece of data on a same memory page in the unit periodicity is less than a second threshold. The free page is a memory page used to indicate that no data is stored. The first threshold and the second threshold may be the same or different. When the first threshold and the second threshold are different, the first threshold is greater than the second threshold.

In a possible embodiment, the processor 301 includes a translation look aside buffer (translation look aside buffer, TLB) configured to record a page table management access bit (access bit). The translation lookaside buffer is also referred to as a page table buffer, is a highspeed storage unit located in the processor, and stores some page table files (a page table of translation from a virtual address to a physical address). If the "page table" is stored in a main memory, costs of querying the page table are high, and the TLB located in the memory can improve efficiency of translation from the virtual address to the physical address. The processor may determine whether a memory page is accessed in a unit periodicity, collect statistics on a quantity of times that the memory page is accessed, and define the first threshold and the second threshold based on distribution of the quantity of times that the memory page is accessed, to determine whether the data is cold or hot.

For example, when the access bit is 1, it indicates that a corresponding memory page has been accessed. The access bit may be reset periodically (for example, 1s), and statistics on a quantity of times of setting the access bit is periodically (for example, 40s) collected, to distinguish a case in which a page is accessed within a periodicity of 40s, identify cold data (not accessed within 40s) and hot data (accessed for n times within 40s, where n is greater than or equal to 1). In this way, cold and hot memory data can be identified.

The scenario shown in FIG. 2 is used as an example. The scheduler 2311 in the host user mode 230 may send a control command, for example, a scanning request and a migration request, to the hypervisor 221 in the host kernel mode 220, and determine a data migration manner based on information about a cold and hot degree of data fed back by the host kernel mode 220, to control a migration operation by a migration data set to be performed between different memory media. Using a scanning request as an example, the scheduler 2311 sends a scanning request to a kernel of a running operating system. The kernel traverses two LRU linked lists associated with each NUMA node, determines, from the two LRU linked lists, a memory page that has been accessed since last scanning to this scanning, loads the accessed page to an active list, loads a memory page that has not been accessed to an inactive list, updates a statistical variable of the cold and hot degree, and transfers a scanning result to the scheduler 2311 of the host user mode, so that the scheduler 2311 may learn of a cold and hot degree of a memory page in each NUMA node.

Optionally, because a status of a memory page in the memory medium varies with a quantity of times of accessing data in the memory page, to more accurately learn a data distribution status in the memory medium, the scheduler 4311 may periodically send a scanning request to the kernel of the operating system running on the processor, to obtain a more accurate result that reflects a cold and hot degree of the memory medium. Duration of each periodicity may be the same or different, that is, duration associated with each periodicity may be dynamically adjusted. A dynamic adjustment manner includes obtaining, based on historical statistics information, duration that satisfies an optimal performance requirement or a user configuration.

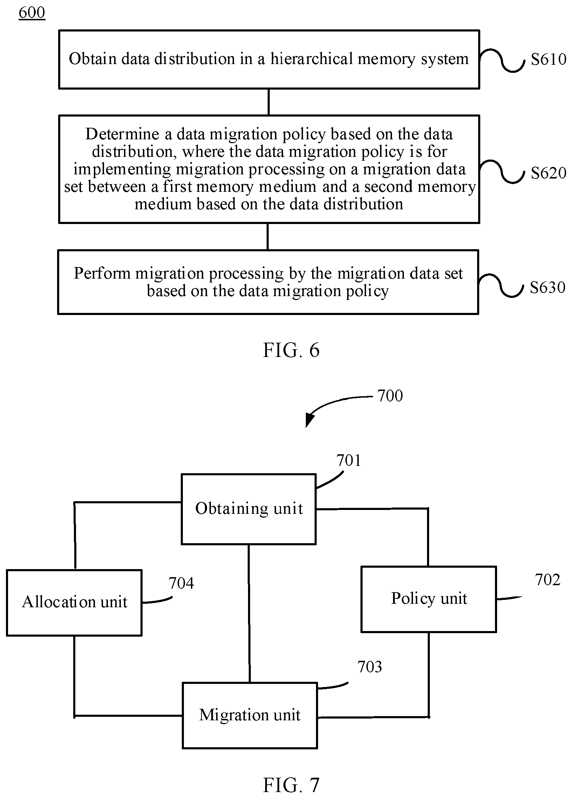

The following further describes, with reference to FIG. 6, a data processing method provided in this application. The method is performed by the processor 301 shown in FIG. 3. The method includes the following steps.

S610: Obtain data distribution in a hybrid memory system.

The data distribution is used to indicate distribution of data in different types of memory media (for example, a first memory medium and a second memory medium) in a multi-level memory system, and is specifically a cold and hot degree of a memory page in the first memory medium or the second memory medium. A specific method for obtaining data distribution may be obtaining a cold and hot degree of each memory page by using the foregoing LRU linked list. For brevity, details are not described herein again.

In a possible implementation, the data distribution may also be determined based on a cold and hot degree of data and physical attributes of memory media, where the physical attributes include at least one of the following: a latency, costs, a capacity, and a service life.

S620: Determine a data migration manner based on the data distribution, where the data migration manner is for implementing migration processing on a migration data set between the first memory medium and the second memory medium based on the data distribution.

Assuming that in the hybrid memory system 400 shown in FIG. 4, a memory medium of a DRAM type belongs to a first level, and a memory medium of an SCM type belongs to a second level, a data migration manner includes at least one of the following two cases.

Case 1: A data set including a hot page in the memory medium of an SCM type is migrated to the memory medium of a DRAM type.

Specifically, a quantity of free pages in the DRAM and a quantity of hot pages in the SCM may be first determined, and then the operation of migrating the data set is performed. For example, when the quantity of free pages in the memory medium of DRAM type is greater than the quantity of hot pages in the memory medium of an SCM type, data of all hot pages is migrated to a free page of the DRAM. Optionally, some of hot page data may be migrated to the free page of the DRAM.

In the foregoing data migration manner, the data set of the hot page in the memory medium of an SCM type may be stored in the memory medium of a DRAM type, thereby reducing a latency when data is accessed.

Case 2: A data set including a cold page in the memory medium of a DRAM type is migrated to the memory medium of an SCM type.

Specifically, a quantity of free pages in the SCM and a quantity of cold pages in the DRAM may be first determined, and then the operation of migrating the data set is performed. For example, when the quantity of free pages in the memory medium of DRAM type is less than or equal to the quantity of hot pages in the memory medium of an SCM type, data of all cold pages is migrated to a free page of the SCM. Optionally, some of cold page data may be migrated to the free page of the SCM.

In the data migration manner in Case 2, the data set in the cold page in the DRAM may be migrated to the storage medium of an SCM type, so that cold data that is not frequently accessed is stored in a cost-effective memory medium, thereby ensuring that hot data is stored by using a low-latency memory medium of a DRAM type, and improving processing efficiency of the entire hybrid memory system.

In a possible implementation, for case 2, the data set including the hot page in the memory medium of an SCM type may be further migrated to the memory medium of a DRAM type.

S630: Perform migration processing by the migration data set based on the data migration manner.

Specifically, after determining the data migration manner, the processor 603 migrates cold data to a cost-effective memory medium of an SCM type, and migrates hot data to a low-latency memory medium of a DRAM type, to implement hierarchical data storage in the hybrid memory system, and implement proper data storage with reference to a data attribute and classification of memory media, thereby reducing costs of the entire system and ensuring data processing efficiency.

Specifically, when migrating the cold data to a cost-effective memory medium of a storage-class type, the processor 603 may first select one or more free memory pages from the memory page pool including the SCM, for example, select one or more huge-page memories in a free state from the huge-page pool including the memory medium of an SCM type, and then migrate to-be-migrated cold data to the selected free huge-page memory. When the processor 603 needs to migrate the hot data to the DRAM of a low latency, the processor 603 may first select one or more free memory pages from the memory pool of the memory medium of a DRAM type, for example, select one or more free-state huge-page memories from the huge-page pool of the dynamic random access memory, and then migrate to-be-migrated hot data to the selected free huge-page memory.

It should be noted that a quantity of selected free memory pages is related to a size and distribution of the to-be-migrated data set. During specific implementation, the quantity may be set based on a service requirement.

In a possible embodiment, to adapt to the memory migration method provided in this application, the processor may further include a memory copy middleware module, which may also be referred to as a memcpy middleware. The memory copy middleware module may determine a NUMA node to which the memory copy middleware module belongs based on a copied destination address, to determine a medium type of a memory medium with the destination address of the to-be-migrated. When data of the DRAM needs to be copied to the SCM, the memory copy middleware module uses a modified memcpy (memcpy) instruction to implement the copy. This implementation can optimize write bandwidth of the SCM to a maximum extent. In another aspect, when data is read from the SCM to the DRAM, the memory copy middleware module sends an address and a data length of the data to an original memcpy function of a kernel (kernel) for processing, to implement a migration operation by a migration data set between different memory media.

It can be learned from the descriptions of the foregoing solutions that, memory media of multiple different types are supported, the SCM memory media is enabled, and a memory type is extended. Memory pages of different memory media are periodically scanned by using memory cold and hot attribute identifiers, to collect statistics on access statuses of the memory pages. Hierarchical memory with different performance corresponds to the cold and hot attributes, and a hierarchical memory mechanism is implemented at a system level, thereby ensuring data processing efficiency and reducing memory costs. In addition, for the huge-page memory, a data structure for cold and hot management based on an LRU linked list is provided. A data attribute in a memory page in a memory page pool is periodically scanned, to determine a status of the memory page. In this case, effective data migration processing is implemented.

It is to be noted that, for ease of description, the foregoing method embodiments are described as a series of action combinations. However, a person skilled in the art should understand that this application is not limited to the described an order of the actions. In addition, a person skilled in the art should also understand that the embodiments described in this specification are all preferred embodiments, and the involved actions are not necessarily mandatory for this application.

With reference to FIG. 1 to FIG. 6, the foregoing describes in detail the data processing method provided in embodiments of this application. With reference to FIG. 7, the following describes a data processing apparatus and a hybrid memory system that are provided in embodiments of this application.

FIG. 7 is a schematic diagram of a structure of a data processing apparatus according to this application. As shown in the figure, the apparatus 700 is used in a hybrid memory system, the hybrid memory system includes multiple different types of memory media, the multiple memory media include a first memory medium and a second memory medium, and the apparatus 700 includes:
an obtaining unit 701, configured to obtain data distribution in a hybrid memory system;
a policy unit 702, configured to determine a data migration manner based on the data distribution, where the data migration manner is for implementing migration processing on a migration data set between the first memory medium and the second memory medium based on the data distribution; and
a migration unit 703, configured to perform migration processing on the migration data set based on the migration manner.

It should be understood that the apparatus 700 in this embodiment of this application may be implemented by using a central processing unit (central processing unit, CPU), or may be implemented by using an application-specific integrated circuit (application-specific integrated circuit, ASIC) or a programmable logic device (programmable logic device, PLD). The PLD may be a complex program logical device (complex programmable logical device, CPLD), a field-programmable gate array (field-programmable gate array, FPGA), generic array logic (generic array logic, GAL), or any combination thereof. Alternatively, when the data processing method shown in FIG. 6 may be implemented by using software, the apparatus 700 and the modules of the apparatus may also be software modules.

Optionally, the apparatus 700 further includes an allocation unit 704.

The obtaining unit 701 is further configured to obtain a memory layout of the hybrid memory system, where the memory layout includes a quantity and types of memories deployed in the memory system.

The allocation unit 704 is configured to allocate a memory resource to a first processor based on the memory layout, where the first processor is associated with a least recently used LRU linked list, the LRU linked list is used to record a cold and hot degree of stored data in a memory resource allocated to the first processor, the LRU linked list includes an active list Active list and an inactive list Inactive list, the active list identifies information about a memory page on which hot data associated with the first processor is located, and the inactive list identifies information about a memory page on which cold data associated with the first processor is located.

Optionally, the obtaining unit 701 is specifically configured to: obtain a scanning request; and traverse, based on the scanning request, data distribution of memory pages in the first memory medium and the second memory medium that are associated with a first processor in a hierarchical storage system, where the data distribution includes statuses of the memory pages in the first memory medium and the second memory medium, and the statuses of the memory page includes a hot page, a cold page, or a free page.

Optionally, the first memory medium includes a first huge-page memory pool, the second memory medium includes a second huge-page memory pool. The first huge-page memory pool and the second huge-page memory pool each include at least one first memory page, and a size of each of the at least one first memory page is greater than a first threshold.

Optionally, the obtaining unit 701 is specifically configured to periodically obtain the scanning request, where the scanning request is used to periodically collect statistics on a cold and hot degree of the first memory page in the first huge-page memory page pool and the second huge-page memory pool in the first memory medium and the second memory medium.

Optionally, the policy unit 702 is configured to collect statistics, in a unit periodicity, on a quantity of times that data in a first memory page is read; and increase popularity of the first memory page by one when a read operation is performed on the data in the first memory page once, where the popularity indicates a cold and hot degree in which the data in the first memory page is accessed in the unit periodicity.

Optionally, the policy unit 702 is specifically configured to determine a hierarchical memory mechanism in the hybrid memory system, where the hierarchical memory mechanism indicates levels of the multiple different types of memory media in the hybrid memory system, the hybrid memory system includes multiple levels, and the multiple levels include a first level and a second level; and determine the data migration manner based on the data distribution and the hierarchical memory mechanism.

Optionally, the first memory medium belongs to the first level, and the second memory medium belongs to the second level.

The migration unit 703 is specifically configured to: when a quantity of free pages in the first memory medium is greater than a quantity of hot pages in the second storage medium, select one or more free memory pages from the first memory pool, and migrate a first data set including data of hot pages in the second memory medium to the one or more free memory pages in the first memory pool.

Optionally, the first memory medium belongs to the first level, the second memory medium belongs to the second level, the migration data set further includes a second data set, the second data set includes at least one piece of cold data, and the cold data is data of which a quantity of times of being read and written in a unit periodicity is less than or equal to a second threshold.

The migration unit 703 is specifically configured to: when the quantity of free pages in the first memory medium is less than or equal to the quantity of hot pages in the second memory medium, select one or more free memory pages from the second memory pool, and migrate the second data set including data of a cold page in the first memory medium to the one or more free memory pages in the second memory pool.

Optionally, the migration unit 703 is further configured to migrate the first data set including data of a hot page in the second memory medium to one or more free memory pages in the first memory pool.

Optionally, a latency of the first memory medium is lower than a latency of the second memory medium, and costs of the first memory medium are higher than costs of the second memory medium.

Optionally, a service life of a first storage medium is longer than that of the first memory medium, and a capacity of the first storage medium is less than a capacity of the second memory medium.

Optionally, the first memory medium is a dynamic random access memory DRAM, the second memory medium is a storage-class memory SCM, and the SCM includes at least one of the following: a phase-change memory PCM, a magnetoresistive random-access memory MRAM, a resistive random access memory RRAM, a ferroelectric random access memory FRAM, a fast NAND, or a nano-RAM NRAM.

Optionally, the apparatus is connected to the multiple different types of memory media through an interface supporting memory semantics, and the interface includes at least one interface that supports a compute express link CXL, a cache coherent interconnect for accelerators CCIX, or a unified bus UB.

Optionally, the hybrid memory system is used in a scenario in which a large-capacity memory is deployed, and the scenario includes at least one of the following: big data, an in-memory database, or a cloud service.

The apparatus 700 according to this embodiment of this application may correspondingly perform the method described in embodiments of this application. In addition, the foregoing and other operations and/or functions of the units in the apparatus 700 are respectively used to implement corresponding procedures of the method in FIG. 5. For brevity, details are not described herein again.

This application further provides a hybrid memory system. For example, as shown in FIG. 3, the hybrid memory system includes a processor and multiple different types of memory media. For brevity, details are not described herein again.

This application further provides a processor. The processor includes an integrated circuit. The integrated circuit is connected to multiple different types of memory media. The integrated circuit is configured to implement functions of the operation steps in the method 600 shown in FIG. 6. For brevity, details are not described herein again.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method is applied to a hybrid memory system, the hybrid memory system comprises multiple different types of memory media (302, 303) and a processor (301),
∘ wherein the multiple memory media (302, 303) comprise a first memory medium and a second memory medium, wherein the first memory medium and the second memory medium are of different types,
∘ wherein the processor (301) is associated with a least recently used, LRU, linked list,
- wherein the LRU linked list is used to record a cold and hot degree of memory pages that constitute a memory resource that stores data, wherein the memory resource is allocated to the processor (301) and is a memory resource of both, the first memory medium and the second memory medium,
- wherein the LRU linked list comprises an active list and an inactive list, the active list identifies information about hot memory pages of the memory resource, and the inactive list identifies information about cold memory pages of the memory resource, wherein a hot memory page is a memory page whose quantity of times of accessing any piece of data on that same memory page in a unit periodicity is greater than a first threshold, and a cold memory page is a memory page whose quantity of times of accessing any piece of data on that same memory page in the unit periodicity is less than a second threshold, wherein the first threshold and the second threshold are the same or are different, wherein, when the first threshold and the second threshold are different, the first threshold is greater than the second threshold,
wherein the method comprises the steps of:
• obtaining (S 610), by the processor (301), a data distribution of the data stored in the first memory medium and the second memory medium by using the LRU linked list, wherein the data distribution comprises statuses of the memory pages in the first memory medium and the second memory medium, and the status of the memory page comprises a hot memory page, a cold memory page, or a free memory page, the free memory page being a memory page not storing any data;
• determining (S 620), by the processor (301), a data migration manner based on the data distribution, wherein the data migration manner is for implementing migration processing on a migration data set between the first memory medium and the second memory medium based on the data distribution; and
• performing (S 630), by the processor (301), migration processing on the migration data set based on the migration manner.

2. The method according to claim 1, wherein the method further comprises:
∘ obtaining, by the processor, a scanning request; and
∘ traversing, by the processor based on the scanning request, the data distribution of the memory pages in the first memory medium and the second memory medium that are associated with the processor in the hybrid memory system.

3. The method according to claim 2, wherein the first memory medium comprises a first huge-page memory pool, the second memory medium comprises a second huge-page memory pool, and sizes of memory pages in the first huge-page memory pool and the second huge-page memory pool are greater than a third threshold.

4. The method according to claim 2 or 3, wherein the obtaining the scanning request comprises:
∘ periodically obtaining the scanning request, wherein the scanning request is used to periodically collect statistics on the cold and hot degrees of the memory pages in the first memory medium and the second memory medium.

5. The method according to claim 2, wherein before the obtaining the scanning request, the method further comprises:
∘ collecting, by the processor, statistics, in a unit periodicity, on a quantity of times that data in a first memory page is read; and
∘ increasing, by the processor, a popularity of the first memory page by one when a read operation is performed on the data in the first memory page once, wherein the popularity indicates a cold and hot degree in which the data in the first memory page is accessed in the unit periodicity.

6. The method according to any one of claims 1 to 5, wherein the migration data set comprises a first data set, the first data set comprises at least one piece of hot data, and the hot data is data of which a quantity of times of being read and written in the unit periodicity is greater than the first threshold.

7. The method according to any one of claims 1 to 6, wherein the determining the data migration manner based on the data distribution comprises:
∘ determining a hierarchical memory mechanism in the hybrid memory system, wherein the hierarchical memory mechanism indicates levels of the multiple different types of memory media in the hybrid memory system, the hybrid memory system comprises multiple levels, and the multiple levels comprise a first level and a second level; and
∘ determining the data migration manner based on the data distribution and the hierarchical memory mechanism.

8. The method according to claim 7, wherein the first memory medium belongs to the first level, and the second memory medium belongs to the second level; and the determining the data migration manner based on the data distribution and the hierarchical memory mechanism comprises:
∘ selecting one or more free memory pages from the first huge-page memory pool, and migrating the first data set comprising data of a hot page in the second memory medium to the one or more free memory pages in the first huge-page memory pool.

9. The method according to claim 7, wherein the first memory medium belongs to the first level, the second memory medium belongs to the second level, the migration data set further comprises a second data set, the second data set comprises at least one piece of cold data, and the cold data is data of which a quantity of times of being read and written in the unit periodicity is less than or equal to the second threshold; and
the determining the data migration manner based on the data distribution and the hierarchical memory mechanism comprises:
∘ selecting one or more free memory pages from the second huge-page memory pool, and migrating the second data set comprising data of a cold page in the first memory medium to the one or more free memory pages in the second huge-page memory pool.

10. The method according to claim 9, wherein the method further comprises:
∘ migrating, by the processor, the first data set comprising data of a hot page in the second memory medium to one or more free memory pages in the first huge-page memory pool.

11. The method according to any one of claims 1 to 10, wherein the first memory medium is a dynamic random access memory, DRAM, the second memory medium is a storage-class memory, SCM, and the SCM comprises at least one of the following: a phase-change memory, PCM, a magnetoresistive random-access memory, MRAM, a resistive random access memory, RRAM, a ferroelectric random access memory, FRAM, a fast NAND, or a nano-RAM, NRAM.

12. The method according to any one of claims 1 to 11, wherein the processor is connected to the multiple different types of memory media through an interface supporting memory semantics, and the interface comprises at least one interface that supports a compute express link, CXL, a cache coherent interconnect for accelerators, CCIX, or a unified bus UB.

13. A processor (301) configured to perform the method according to any of claims 1 to 12.

14. A hybrid memory system, wherein the hybrid memory system comprises multiple different types of memory media (302, 303) and a processor (301),
∘ wherein the multiple memory media (302, 303) comprise a first memory medium and a second memory medium, wherein the first memory medium and the second memory medium are of different types,
∘ wherein the processor (301) is associated with a least recently used, LRU, linked list,
- wherein the LRU linked list is used to record a cold and hot degree of memory pages that constitute a memory resource that stores data, wherein the memory resource is allocated to the processor (301) and is a memory resource of both, the first memory medium and the second memory medium,
- wherein the LRU linked list comprises an active list and an inactive list, the active list identifies information about hot memory pages of the memory resource, and the inactive list identifies information about cold memory pages of the memory resource, wherein a hot memory page is a memory page whose quantity of times of accessing any piece of data on that same memory page in a unit periodicity is greater than a first threshold, and a cold memory page is a memory page whose quantity of times of accessing any piece of data on that same memory page in the unit periodicity is less than a second threshold, wherein the first threshold and the second threshold are the same or are different, wherein, when the first threshold and the second threshold are different, the first threshold is greater than the second threshold,
wherein the first memory medium or the second memory medium is configured to store computer executable instructions, wherein, when the computer executable instructions are executed by the processor (301), the processor (301) is caused to perform the method according to any of claims 1 to 12.

## Patentansprüche

1. Datenverarbeitungsverfahren, wobei das Verfahren auf ein Hybridspeichersystem angewendet wird, das Hybridspeichersystem mehrere verschiedene Typen von Speichermedien (302, 303) und einen Prozessor (301) umfasst,
∘ wobei die mehreren Speichermedien (302, 303) ein erstes Speichermedium und ein zweites Speichermedium umfassen, wobei das erste Speichermedium und das zweite Speichermedium verschiedener Typen sind,
∘ wobei der Prozessor (301) einer zuletzt verwendeten verketteten Liste, verketteten LRU-Liste, zugeordnet ist,
- wobei die verkettete LRU-Liste verwendet wird, um den Kalt- und Heißgrad von Speicherseiten zu erfassen, die eine Speicherressource darstellen, die Daten speichert, wobei die Speicherressource dem Prozessor (301) zugeordnet ist und eine Speicherressource sowohl des ersten Speichermediums als auch des zweiten Speichermediums ist,
- wobei die verkettete LRU-Liste eine aktive Liste und eine inaktive Liste umfasst, die aktive Liste Informationen über heiße Speicherseiten der Speicherressource identifiziert und die inaktive Liste Informationen über kalte Speicherseiten der Speicherressource identifiziert, wobei eine heiße Speicherseite eine Speicherseite ist, deren Anzahl der Male des Zugreifens auf ein beliebiges Teil von Daten auf derselben Speicherseite in einer Einheitsperiodizität größer als ein erster Schwellenwert ist, und eine kalte Speicherseite eine Speicherseite ist, deren Anzahl der Male des Zugreifens auf ein beliebiges Teil von Daten auf derselben Speicherseite in einer Einheitsperiodizität kleiner als ein zweiter Schwellenwert ist, wobei der erste Schwellenwert und der zweite Schwellenwert gleich oder verschieden sind, wobei, wenn der erste Schwellenwert und der zweite Schwellenwert verschieden sind, der erste Schwellenwert größer als der zweite Schwellenwert ist,
wobei das Verfahren die folgenden Schritte umfasst:
• Erlangen (S 610) einer Datenverteilung der in dem ersten Speichermedium und dem zweiten Speichermedium gespeicherten Daten durch den Prozessor (301) unter Verwendung der verketteten LRU-Liste, wobei die Datenverteilung Zustände der Speicherseiten in dem ersten Speichermedium und dem zweiten Speichermedium umfasst, und der Zustand der Speicherseite eine heiße Speicherseite, eine kalte Speicherseite oder eine freie Speicherseite umfasst, wobei die freie Speicherseite eine Speicherseite ist, die keine Daten speichert;
• Bestimmen (S 620) einer Datenmigrationsweise durch den Prozessor (301) basierend auf der Datenverteilung, wobei die Datenmigrationsweise zum Implementieren einer Migrationsverarbeitung an einem Migrationsdatensatz zwischen dem ersten Speichermedium und dem zweiten Speichermedium basierend auf der Datenverteilung dient; und
• Durchführen (S 630) einer Migrationsverarbeitung an dem Migrationsdatensatz durch den Prozessor (301) basierend auf der Migrationsweise.

2. Verfahren nach Anspruch 1, wobei das Verfahren ferner Folgendes umfasst:
∘ Erlangen einer Scananforderung durch den Prozessor; und
∘ Durchlaufen der Datenverteilung der Speicherseiten in dem ersten Speichermedium und dem zweiten Speichermedium, die dem Prozessor in dem Hybridspeichersystem zugeordnet sind, durch den Prozessor basierend auf der Scananforderung.

3. Verfahren nach Anspruch 2, wobei das erste Speichermedium einen ersten Speicherpool riesiger Seiten umfasst, das zweite Speichermedium einen zweiten Speicherpool riesiger Seiten umfasst, und die Größen von Speicherseiten in dem ersten Speicherpool riesiger Seiten und dem zweiten Speicherpool riesiger Seiten größer als ein dritter Schwellenwert sind.

4. Verfahren nach Anspruch 2 oder 3, wobei das Erlangen der Scananforderung Folgendes umfasst:
∘ periodisches Erlangen der Scananforderung, wobei die Scananforderung verwendet wird, um periodisch Statistiken über die Kalt- und Heißgrade der Speicherseiten in dem ersten Speichermedium und dem zweiten Speichermedium zu sammeln.

5. Verfahren nach Anspruch 2, wobei das Verfahren vor dem Erlangen der Scananforderung ferner Folgendes umfasst:
∘ Sammeln von Statistiken durch den Prozessor in einer Einheitsperiodizität über eine Anzahl der Lesevorgänge von Daten in einer ersten Speicherseite; und
∘ Erhöhen einer Popularität der ersten Speicherseite um eins durch den Prozessor, wenn ein Lesevorgang an den Daten in der ersten Speicherseite einmal durchgeführt wird, wobei die Popularität einen Kalt- und Heißgrad angibt, in welchem auf die Daten in der ersten Speicherseite in der Einheitsperiodizität zugegriffen wird.

6. Verfahren nach einem der Ansprüche 1 bis 5, wobei der Migrationsdatensatz einen ersten Datensatz umfasst, der erste Datensatz mindestens ein Teil heißer Daten umfasst, und die heißen Daten Daten sind, von welchen eine Anzahl von Malen, die sie in der Einheitsperiodizität gelesen und geschrieben werden, größer als der erste Schwellenwert ist.

7. Verfahren nach einem der Ansprüche 1 bis 6, wobei das Bestimmen der Datenmigrationsweise basierend auf der Datenverteilung Folgendes umfasst:
∘ Bestimmen eines hierarchischen Speichermechanismus in dem Hybridspeichersystem, wobei der hierarchische Speichermechanismus Ebenen der mehreren verschiedenen Typen von Speichermedien in dem Hybridspeichersystem angibt, das Hybridspeichersystem mehrere Ebenen umfasst, und die mehreren Ebenen eine erste Ebene und eine zweite Ebene umfassen; und
∘ Bestimmen der Datenmigrationsweise basierend auf der Datenverteilung und dem hierarchischen Speichermechanismus.

8. Verfahren nach Anspruch 7, wobei das erste Speichermedium zu der ersten Ebene gehört und das zweite Speichermedium zu der zweiten Ebene gehört; und das Bestimmen der Datenmigrationsweise basierend auf der Datenverteilung und dem hierarchischen Speichermechanismus Folgendes umfasst:
∘ Auswählen einer oder mehrerer freier Speicherseiten aus dem ersten Speicherpool riesiger Seiten und Migrieren des ersten Datensatzes, umfassend Daten einer heißen Seite in dem zweiten Speichermedium, zu der einen oder den mehreren freien Speicherseiten in dem ersten Speicherpool riesiger Seiten.

9. Verfahren nach Anspruch 7, wobei das erste Speichermedium zu der ersten Ebene gehört, das zweite Speichermedium zu der zweiten Ebene gehört, der Migrationsdatensatz ferner einen zweiten Datensatz umfasst, der zweite Datensatz mindestens ein Teil kalter Daten umfasst, und die kalten Daten Daten sind, von welchen eine Anzahl von Malen, die sie in der Einheitsperiodizität gelesen und geschrieben werden, kleiner oder gleich dem zweiten Schwellenwert ist; und
das Bestimmen der Datenmigrationsweise basierend auf der Datenverteilung und dem hierarchischen Speichermechanismus Folgendes umfasst:
∘ Auswählen einer oder mehrerer freier Speicherseiten aus dem zweiten Speicherpool riesiger Seiten und Migrieren des zweiten Datensatzes, umfassend Daten einer kalten Seite in dem ersten Speichermedium, zu der einen oder den mehreren freien Speicherseiten in dem zweiten Speicherpool riesiger Seiten.

10. Verfahren nach Anspruch 9, wobei das Verfahren ferner Folgendes umfasst:
∘ Migrieren des ersten Datensatzes, umfassend Daten einer heißen Seite in dem zweiten Speichermedium, zu einer oder mehreren freien Speicherseiten in dem ersten Speicherpool riesiger Seiten durch den Prozessor.

11. Verfahren nach einem der Ansprüche 1 bis 10, wobei das erste Speichermedium ein dynamischer Direktzugriffsspeicher, DRAM, ist, das zweite Speichermedium ein Speicherklassenspeicher, SCM, ist und der SCM mindestens einen der Folgenden umfasst: einen Phasenwechselspeicher, PCM, einen magnetoresistiven Direktzugriffsspeicher, MRAM, einen resistiven Direktzugriffsspeicher, RRAM, einen ferroelektrischen Direktzugriffsspeicher, FRAM, einen schnellen NAND oder einen Nano-Direktzugriffsspeicher, NRAM.

12. Verfahren nach einem der Ansprüche 1 bis 11, wobei der Prozessor über eine Schnittstelle, die eine Speichersemantik unterstützt, mit mehreren unterschiedlichen Typen von Speichermedien verbunden ist, und die Schnittstelle mindestens eine Schnittstelle umfasst, die eine Compute-Express-Verbindung, CXL, einen Cache-Coherent Interconnect for Accelerators, CCIX, oder einen einzelnen Bus, UB, unterstützt.

13. Prozessor (301), der dazu konfiguriert ist, das Verfahren nach einem der Ansprüche 1 bis 12 durchzuführen.

14. Hybridspeichersystem, wobei das Hybridspeichersystem mehrere verschiedene Typen von Speichermedien (302, 303) und einen Prozessor (301) umfasst,
∘ wobei die mehreren Speichermedien (302, 303) ein erstes Speichermedium und ein zweites Speichermedium umfassen, wobei das erste Speichermedium und das zweite Speichermedium verschiedener Typen sind,
∘ wobei der Prozessor (301) einer zuletzt verwendeten verketteten Liste, verketteten LRU-Liste, zugeordnet ist,
- wobei die verkettete LRU-Liste verwendet wird, um den Kalt- und Heißgrad von Speicherseiten zu erfassen, die eine Speicherressource darstellen, die Daten speichert, wobei die Speicherressource dem Prozessor (301) zugeordnet ist und eine Speicherressource sowohl des ersten Speichermediums als auch des zweiten Speichermediums ist,
- wobei die verkettete LRU-Liste eine aktive Liste und eine inaktive Liste umfasst, die aktive Liste Informationen über heiße Speicherseiten der Speicherressource identifiziert und die inaktive Liste Informationen über kalte Speicherseiten der Speicherressource identifiziert, wobei eine heiße Speicherseite eine Speicherseite ist, deren Anzahl der Male des Zugreifens auf ein beliebiges Teil von Daten auf derselben Speicherseite in einer Einheitsperiodizität größer als ein erster Schwellenwert ist, und eine kalte Speicherseite eine Speicherseite ist, deren Anzahl der Male des Zugreifens auf ein beliebiges Teil von Daten auf derselben Speicherseite in einer Einheitsperiodizität kleiner als ein zweiter Schwellenwert ist, wobei der erste Schwellenwert und der zweite Schwellenwert gleich oder verschieden sind, wobei, wenn der erste Schwellenwert und der zweite Schwellenwert verschieden sind, der erste Schwellenwert größer als der zweite Schwellenwert ist,
wobei das erste Speichermedium oder das zweite Speichermedium dazu konfiguriert ist, computerausführbare Anweisungen zu speichern, wobei bei Ausführung der computerausführbaren Anweisungen durch den Prozessor (301) bewirkt wird, dass der Prozessor (301) das Verfahren nach einem der Ansprüche 1 bis 12 durchführt.

## Revendications

1. Procédé de traitement de données, dans lequel le procédé est appliqué à un système de mémoire hybride, le système de mémoire hybride comprend de multiples types différents de supports de mémoire (302, 303) et un processeur (301),
∘ dans lequel les supports de mémoire multiples (302, 303) comprennent un premier support de mémoire et un second support de mémoire, le premier support de mémoire et le second support de mémoire étant de types différents,
∘ dans lequel le processeur (301) est associé à une liste chaînée la moins récemment utilisée, LRU,
- dans lequel la liste chaînée LRU est utilisée pour enregistrer un degré de chaleur et de froid de pages de mémoire qui constituent une ressource mémoire qui stocke des données, dans lequel la ressource mémoire est allouée au processeur (301) et est une ressource mémoire à la fois du premier support de mémoire et du second support de mémoire,
- dans lequel la liste chaînée LRU comprend une liste active et une liste inactive, la liste active identifie des informations relatives à des pages de mémoire chaudes de la ressource mémoire, et la liste inactive identifie des informations relatives à des pages de mémoire froides de la ressource mémoire, dans lequel une page de mémoire chaude est une page de mémoire dont le nombre de fois où une donnée quelconque est consultée sur cette même page de mémoire dans une période unitaire est supérieur à un premier seuil, et une page de mémoire froide est une page de mémoire dont le nombre de fois où une donnée quelconque est consultée sur cette même page de mémoire dans la périodicité unitaire est inférieur à un deuxième seuil, dans lequel le premier seuil et le deuxième seuil sont les mêmes ou sont différents, dans lequel, lorsque le premier seuil et le deuxième seuil sont différents, le premier seuil est supérieur au deuxième seuil,
dans lequel le procédé comprend les étapes suivantes :
• l'obtention (S 610), par le processeur (301), d'une distribution de données des données stockées dans le premier support de mémoire et le second support de mémoire en utilisant la liste chaînée LRU, dans lequel la distribution de données comprend les états des pages de mémoire dans le premier support de mémoire et le second support de mémoire, et l'état de la page de mémoire comprend une page de mémoire chaude, une page de mémoire froide, ou une page de mémoire libre, la page de mémoire libre étant une page de mémoire ne stockant aucune donnée ;
• la détermination (S 620), par le processeur (301), d'une méthode de migration de données basée sur la distribution des données, dans lequel la méthode de migration de données permet de mettre en œuvre un traitement de migration sur un ensemble de données de migration entre le premier support de mémoire et le second support de mémoire sur la base de la distribution de données ; et
• la réalisation (S 630), par le processeur (301), d'un traitement de migration sur l'ensemble de données de migration sur la base de la méthode de migration.

2. Procédé selon la revendication 1, dans lequel le procédé comprend en outre :
∘ l'obtention, par le processeur, d'une demande de numérisation ; et
∘ le parcours, par le processeur sur la base de la demande de numérisation, de la distribution de données des pages de mémoire dans le premier support de mémoire et le second support de mémoire qui sont associés au processeur dans le système de mémoire hybride.

3. Procédé selon la revendication 2, dans lequel le premier support de mémoire comprend un premier groupe de mémoire à pages énormes, le second support de mémoire comprend un second groupe de mémoire à pages énormes, et les tailles de pages de mémoire dans le premier groupe de mémoire à pages énormes et le second groupe de mémoire à pages énormes sont supérieures à un troisième seuil.

4. Procédé selon la revendication 2 ou 3, dans lequel l'obtention de la demande de numérisation comprend :
∘ l'obtention périodique de la demande de numérisation, dans lequel la demande de numérisation est utilisée pour collecter périodiquement des statistiques sur les degrés de chaleur et de froid des pages de mémoire dans le premier support de mémoire et le second support de mémoire.

5. Procédé selon la revendication 2, dans lequel avant l'obtention de la demande de numérisation, le procédé comprend en outre :
∘ la collecte, par le processeur, de statistiques, dans une périodicité unitaire, sur un nombre de fois où les données dans une première page de mémoire sont lues ; et
∘ l'augmentation, par le processeur, d'une popularité de la première page de mémoire d'une unité lorsqu'une opération de lecture est réalisée sur les données dans la première page de mémoire, dans lequel la popularité indique un degré de chaleur et de froid dans lequel les données dans la première page de mémoire sont accédées dans la périodicité unitaire.

6. Procédé selon l'une quelconque des revendications 1 à 5, dans lequel l'ensemble de données de migration comprend un premier ensemble de données, le premier ensemble de données comprend au moins une donnée chaude, et les données chaudes sont des données dont un nombre de fois où elles sont lues et écrites dans la périodicité unitaire est supérieur au premier seuil.

7. Procédé selon l'une quelconque des revendications 1 à 6, dans lequel la détermination de la méthode de migration de données sur la base de la distribution de données comprend :
∘ la détermination d'un mécanisme de mémoire hiérarchique dans le système de mémoire hybride, dans lequel le mécanisme de mémoire hiérarchique indique les niveaux des différents types de supports de mémoire dans le système de mémoire hybride, le système de mémoire hybride comprend de multiples niveaux, et les multiples niveaux comprennent un premier niveau et un second niveau ; et
∘ la détermination de la méthode de migration de données sur la base de la distribution de données et du mécanisme de mémoire hiérarchique.

8. Procédé selon la revendication 7, dans lequel le premier support de mémoire appartient au premier niveau, et le second support de mémoire appartient au second niveau ; et la détermination de la méthode de migration des données sur la base de la distribution de données et du mécanisme de mémoire hiérarchique comprend :
∘ la sélection d'une ou plusieurs pages de mémoire libres provenant du premier groupe de mémoire à pages énormes, et la migration du premier ensemble de données comprenant des données d'une page chaude dans le second support de mémoire vers les une ou plusieurs pages de mémoire libres dans le premier groupe de mémoire à pages énormes.

9. Procédé selon la revendication 7, dans lequel le premier support de mémoire appartient au premier niveau, le second support de mémoire appartient au second niveau, l'ensemble de données de migration comprend en outre un second ensemble de données, le second ensemble de données comprend au moins une donnée froide, et les données froides sont des données dont un nombre de fois où elles sont lues et écrites dans la périodicité unitaire est inférieur ou égal au deuxième seuil ; et
la détermination de la méthode de migration de données sur la base de la distribution de données et du mécanisme de mémoire hiérarchique comprend :
∘ la sélection d'une ou plusieurs pages de mémoire libres provenant du second groupe de mémoire à pages énormes, et la migration du second ensemble de données comprenant des données d'une page froide dans le premier support de mémoire vers les une ou plusieurs pages de mémoire libres dans le second groupe de mémoire à pages énormes.

10. Procédé selon la revendication 9, dans lequel le procédé comprend en outre :
∘ la migration, par le processeur, du premier ensemble de données comprenant les données d'une page chaude dans le second support de mémoire vers les une ou plusieurs pages de mémoire libres dans le premier groupe de mémoire à pages énormes.

11. Procédé selon l'une quelconque des revendications 1 à 10, dans lequel le premier support de mémoire est une mémoire vive dynamique, DRAM, le second support de mémoire est une mémoire de classe de stockage, SCM, et la SCM comprend au moins l'un des éléments suivants : une mémoire à changement de phase, PCM, une mémoire vive magnétorésistive, MRAM, une mémoire vive résistive, RRAM, une mémoire vive ferroélectrique, FRAM, une NAND rapide, ou une nano-mémoire vive, NRAM.

12. Procédé selon l'une quelconque des revendications 1 à 11, dans lequel le processeur est relié aux multiples types différents de supports de mémoire via une interface prenant en charge la sémantique de mémoire, et l'interface comprend au moins une interface qui prend en charge une liaison express de calcul, CXL, une interconnexion cohérente de cache pour accélérateurs, CCIX, ou un bus unifié UB.

13. Processeur (301) configuré pour réaliser le procédé selon l'une quelconque des revendications 1 à 12.

14. Système de mémoire hybride, dans lequel le système de mémoire hybride comprend de multiples types différents de supports de mémoire (302, 303) et un processeur (301),
∘ dans lequel les supports de mémoire multiples (302, 303) comprennent un premier support de mémoire et un second support de mémoire, le premier support de mémoire et le second support de mémoire étant de types différents,
∘ dans lequel le processeur (301) est associé à une liste chaînée la moins récemment utilisée, LRU,
- dans lequel la liste chaînée LRU est utilisée pour enregistrer un degré de chaleur et de froid de pages de mémoire qui constituent une ressource mémoire qui stocke des données, dans lequel la ressource mémoire est allouée au processeur (301) et est une ressource mémoire à la fois du premier support de mémoire et du second support de mémoire,
- dans lequel la liste chaînée LRU comprend une liste active et une liste inactive, la liste active identifie des informations relatives à des pages de mémoire chaudes de la ressource mémoire, et la liste inactive identifie des informations relatives à des pages de mémoire froides de la ressource mémoire, dans lequel une page de mémoire chaude est une page de mémoire dont le nombre de fois où une donnée quelconque est consultée sur cette même page de mémoire dans une période unitaire est supérieur à un premier seuil, et une page de mémoire froide est une page de mémoire dont le nombre de fois où une donnée quelconque est consultée sur cette même page de mémoire dans la périodicité unitaire est inférieur à un deuxième seuil, dans lequel le premier seuil et le deuxième seuil sont les mêmes ou sont différents, dans lequel, lorsque le premier seuil et le deuxième seuil sont différents, le premier seuil est supérieur au deuxième seuil,
dans lequel le premier support de mémoire ou le second support de mémoire est configurée pour stocker des instructions exécutables par ordinateur, dans lequel, lorsque les instructions exécutables par ordinateur sont exécutées par le processeur (301), le processeur (301) est amené à réaliser le procédé selon l'une quelconque des revendications 1 à 12.
